# EUROPÄISCHE PATENTSCHRIFT

(11) **EP 0 674 561 B1**
(45) Veröffentlichungstag und Bekanntmachung des Hinweises auf die Patenterteilung: **13.01.1999**
(21) Anmeldenummer: 94901824.6
(22) Anmeldetag: 19.11.1993
(51) Int. Cl.: B23B 51/00, B23D 77/04

(54) **VOLLBOHRER**
SOLID DRILL
FORET PLEIN

(30) Priorität: 21.11.1992 DE 4239257
(43) Veröffentlichungstag der Anmeldung: 04.10.1995
(73) Patentinhaber: MAPAL Fabrik für Präzisionswerkzeuge Dr. Kress KG, D-73431 Aalen (DE)
(72) Erfinder: KRESS, Dieter, D-73431 Aalen (DE); HÄBERLE, Friedrich, D-73466 Lauchheim (DE)
(74) Vertreter: Gleiss, Alf-Olav, Dr.jur. Dipl.-Ing.
(86) Internationale Anmeldenummer: EP9303242
(87) Internationale Veröffentlichungsnummer: WO9412306

(56) Entgegenhaltungen:
- EP-A- 0 319 748
- WO-A-84/03241
- DE-A- 2 644 827
- FR-A- 2 298 393
- GB-A- 1 029 476

## Beschreibung

Die Erfindung betrifft einen Vollbohrer nach dem Oberbegriff des Anspruchs 1.

Aus der Druckschrift FR 2 298 393 ist ein solcher gattungsgemäßer Vollbohrer bekannt, der einen Grundkörper, eine stirnseitig offene, eine Messerplatte radial verschieblich aufnehmende Nut und wenigstens eine in die Umfangsfläche des Grundkörpers eingesetzte Führungsleiste aufweist. Der Messerplatte sind dabei zum radialen Verschieben einerseits und zum Festklemmen andererseits verschiedene Elemente zugeordnet. Mittels eines Stellorgans kann die Messerplatte beispielsweise in radialer Richtung verstellt werden, die Festklemmung der Messerplatte erfolgt mittels eines Klemmelements, das mit einer Klemmschraube zusammenwirkt.

Allgemein dienen Vollbohrer der Einbringung von Löchern in Werkstücke, wobei diese Bohrer ins Volle arbeiten können, also der Vorbereitung einer Bohrung nicht bedürfen. Sie weisen daher an der Stirnseite schneiden auf, die das Material des Werkstücks abtragen. Es hat sich dabei als nachteilig erwiesen, daß das Maß der dabei entstehenden Bohrung einerseits sehr ungenau ist, das heißt, von der gewünschten Maßhaltigkeit abweicht, und andererseits die Oberfläche eine unzureichende Qualität aufweist. Es bedarf daher oft einer weiteren Bearbeitung der Bohrung, bevor diese einer Feinbearbeitung unterworfen werden kann. Dies erzwingt zahlreiche Bearbeitungsgänge einer Bohrung, deren Herstellung daraufhin zeit- und kostenaufwendig ist.

Es ist daher Aufgabe der Erfindung, einen Vollbohrer zu schaffen, mit dem Bohrungen ins Volle eingebracht werden können, deren Maßhaltigkeit und Oberflächengüte bereits sehr hohen Anforderungen genügen, so daß zumindest einige Nachbearbeitungsschritte eingespart werden können.

Diese Aufgabe wird bei einem Vollbohrer der eingangs genannten Art mit Hilfe der in Anspruch 1 genannten Merkmale gelöst.

Nach einer bevorzugten Ausgestaltung der Erfindung ist vorgesehen, daß die Messerplatte eine sich axial in den Grundkörper erstreckende Verlängerung aufweist, die mit einer Spann und/oder Verstelleinrichtung zusammenwirkt. Hierdurch wird es möglich, der Messerplatte einen Bereich zuzuordnen, der gleichzeitig zum Festklemmen der Messerplatte in dem Grundkörper verwendet werden kann und über den die radiale Verschiebung für die Messerplatte bewirkbar ist. Die Messerplatte kann dadurch insgesamt einfach aufgebaut werden, da zusätzliche Arretierungsmöglichkeiten für die Messerplatte nicht vorgesehen werden müssen.

Nach einer weiteren bevorzugten Ausgestaltung der Erfindung ist vorgesehen, daß die Verlängerung Wirkflächen aufweist, die vorzugsweise in einem von einem rechten Winkel abweichenden Winkel zu einer durch die Nut verlaufenden Radialen und weiterhin bevorzugt in einen Winkel zur Drehachse verlaufen. Durch diese besondere Ausgestaltung der Klemmflächen ist es möglich, ein sicheres Festspannen der Messerplatte zu erreichen, da die an die Messerplatte angreifenden Spannkräfte nicht gleichgerichtet mit den möglichen Bewegungsrichtungen der Messerplatte innerhalb der Nut wirken.

Besonders bevorzugt wird ein Ausführungsbeispiel des Vollbohrers, bei dem sich die erste Führungsleiste praktisch über die -in Richtung der Drehachse des Werkzeugs gemessenen- Höhe der Messerplatte erstreckt. Damit werden von der die Umfangsfläche des Vollbohrers überragenden Schneidkante in das Werkzeug eingeleitete Kräfte besonders gut abgefangen, ohne daß es zu einer Auslenkung der Bohrerspitze kommt. Dies führt dazu, daß Maßhaltigkeit und Oberflächenqualität der entstehenden Bohrung besonders gut sind.

Weiterhin wird eine Ausführungsform des Vollbohrers bevorzugt, bei der der die Umfangsfläche des Grundkörpers überragenden Schneidkante der Messerplatte eine zweite Führungsleiste und der ersten Führungsleiste eine dritte Führungsleiste zugeordnet sind, die -in Drehrichtung gesehen- der Schneidkante beziehungsweise der ersten Führungsleiste nacheilend angeordnet sind. Durch die zusätzlichen Führungsleisten ergibt sich eine besonders gute Führung und Stabilisierung des Werkzeugs innerhalb der entstehenden Bohrung, so daß sich die genannten guten Ergebnisse bei der Bohrung einstellen.

Eine weitere Ausführungsform des Vollbohrers wird deshalb bevorzugt, weil die die Messerplatte aufnehmende Nut so ausgebildet ist, daß diese sich mit einer der Stirnseite gegenüberliegenden Außenkante am Grund der Nut abstützen kann. Auf diese Weise werden die bei der Bearbeitung eines Werkstücks entstehenden Kräfte optimal vom Grundkörper des Vollbohrers abgefangen.

Weitere Ausgestaltungen des erfindungsgemäßen Vollbohrers ergeben sich aus den übrigen Unteransprüchen.

Anhand der Zeichnung werden Vollbohrer näher erläutert. Es zeigen:
- Figur 1: eine erste Seitenansicht des vorderen Teils eines Vollbohrers;
- Figur 2: eine zweite Seitenansicht der Vorderseite eines Vollbohrers, bei der dieser gemäß der Darstellung in Figur 1 um 180° gedreht wurde;
- Figur 3: eine Seitenansicht des Vollbohrers gemäß Figur 1 von links;
- Figur 4: eine Seitenansicht des in Figur 1 dargestellten Vollbohrers von rechts und
- Figur 5: eine Frontansicht des Vollbohrers;
- Figur 6: eine Seitenansicht der Vorderseite eines erfindungsgemäßen Vollbohrers und
- Figur 7: eine Frontansicht des Vollbohrers gemäß Figur 6.

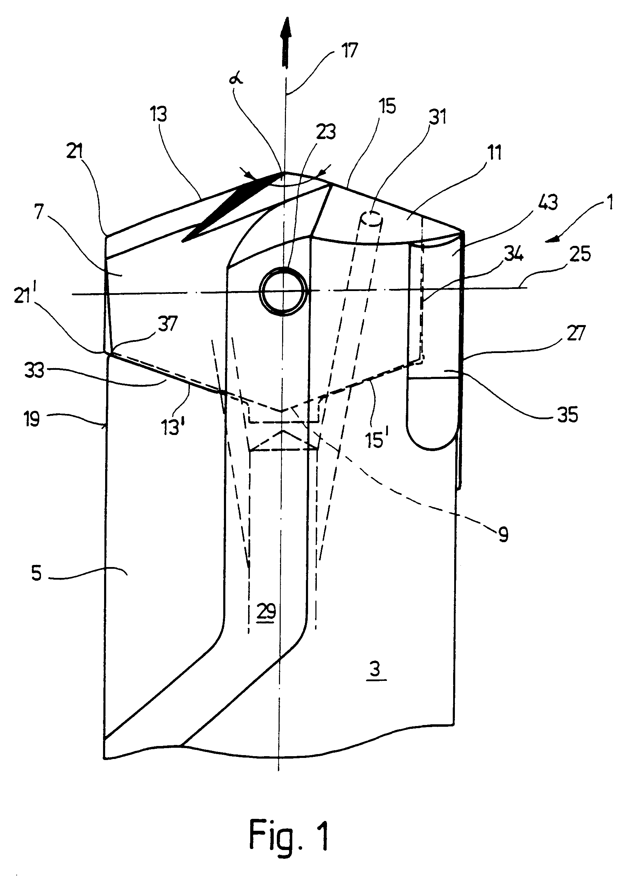

Anhand der Figuren 1 bis 5 werden Vollbohrer und deren Funktion erläutert. Derartige Vollbohrer stellen keine Ausführungsformen des Gegenstands der Ansprüche 1 bis 20 dar.

Die in Figur 1 dargestellte Seitenansicht des vorderen Teils eines Vollbohrers 1 wird als Vorderansicht definiert. Sie zeigt das vordere Ende des Vollbohrers, der sich rückwärtig in einen Schaft fortsetzen kann, der der Aufnahme in einer Werkzeugmaschine dient. Der Grundkörper 3 des Vollbohrers 1 ist im wesentlichen kreiszylindrisch ausgebildet. Auf der linken Seite ist eine segmentartige Ausnehmung eingebracht, beispielsweise eingefräst, die der Bildung eines Spanabfuhrraumes 5 dient. Im Bereich des Spanabfuhrraumes liegt eine Messerplatte 7 frei, die in einer stirnseitig in den Grundkörper 3 des Vollbohrers 1 eingebrachten Nut 9 untergebracht ist. Die Messerplatte 7 überragt die Stirnseite 11 des Vollbohrers 1, so daß zwei stirnseitig wirkende Schneidkanten 13 und 15 gebildet werden, die bei der Bearbeitung eines Werkstücks den Grund der Bohrung abtragen, so daß der Vollbohrer 1 ins Volle arbeiten kann.

Die Schneidkanten 13 und 15 schließen einen stumpfen Winkel α ein, der im Bereich von etwa 140° bis 170° liegt, vorzugsweise etwa 155° beträgt. Die beiden Schneidkanten 13 und 15 schneiden sich in der mit der Mittelachse des Vollbohrers 1 zusammenfallenden Drehachse 17 des Werkzeugs. Der Darstellung gemäß der Figur 1 ist zu entnehmen, daß in einem Abstand zur Drehachse 17 die Schneidkanten 13 und 15 steiler abfallen können, als im unmittelbar an die Drehachse 17 angrenzenden Bereich, wobei hier ein Winkel von 125° bis 155° vorzugsweise von ca. 140° eingeschlossen ist.

Die in Figur 1 linke Schneidkante 13 der Messerplatte 7 überragt die Umfangsfläche 19 des Vollbohrers und bildet somit eine seitliche Schneidkante 21. Die Messerplatte 7 überragt die Umfangsfläche 19 des Werkzeugs nur auf einer Seite, so daß letztlich zwei stirnseitig wirkende Schneidkanten 13 und 15 sowie eine einseitig wirkende seitliche Schneidkante 21 der Messerplatte 7 gegeben sind.

Das Werkzeug beziehungsweise der Vollbohrer 1 wirkt also stirnseitig wie ein sogenannter Zweischneider und im Bereich seiner Umfangsfläche wie ein sogenannter Einschneider.

Dadurch, daß die Messerplatte 7 so breit ausgebildet ist, daß sie ausgehend von der seitlichen Schneidkante 21 die Drehachse 17 des Vollbohrers 1 überragt, findet eine Zentrierung des Werkzeugs innerhalb der Bohrung statt, die darauf beruht, daß die Schneidkanten 13 und 15 einander entgegengesetzte Schneidkräfte aufbringen müssen, die sich aufgrund der unterschiedlichen Länge der Schneidkanten 13 und 15 allerdings nicht vollständig ausgleichen. Durch eine möglichst weite Annäherung der Länge der Schneidkanten 13 und 15 wird jedoch ein sehr weitgehender Kräfteausgleich sichergestellt.

Aus Figur 1 ist ersichtlich, daß den Schneidkanten 13 und 15 gegenüberliegend identische Schneidkanten 13' und 15' vorgesehen sind, das heißt, die Messerplatte 7 ist als Wendeplatte ausgebildet. Entsprechend ist auch gegenüberliegend der seitlichen Schneidkante 21 eine unten links in Figur 1 erkennbare seitliche Schneidkante 21' vorgesehen. Bei dem hier dargestellten Vollbohrer 1 ist die Messerplatte 7 mit einer zentralen Bohrung 23 versehen, durch die eine geeignete Befestigungs- beziehungsweise Spannschraube eingreift. Durch den Mittelpunkt dieser Bohrung verläuft eine Querachse 25, die in diesem Mittelpunkt auch die Drehachse 17 schneidet. Wird die Messerplatte 7 um die Querachse 25 um 180° umgeklappt, liegen die Schneidkanten 13' und 15' oben und überragen die Stirnseite 11 des Vollbohrers 1, während die Schneidkanten 13 und 15 die Stelle der Schneidkanten 13' und 15' einnehmen.

Der seitlichen Schneidkante 21 gegenüberliegend ist eine Führungsleiste 27 vorgesehen, die die durch die seitliche Schneidkante 21 entstehenden Reaktionskräfte abfängt und in die Wandung der entstehenden Bohrung einleitet.

Die erste Führungsleiste 27 ist vorzugsweise so ausgebildet, daß sie sich über die gesamte -in Richtung der Drehachse 17 gemessene- Höhe der Messerplatte 7 erstreckt und mit ihrer Vorderkante bei einer durch ein Doppelpfeil dargestellten Vorschubbewegung des Vollbohrers 1 der seitlichen Schneidkante 21 etwas nacheilt. Quer zur Drehachse 17 gemessen liegt daher die vorderste Kante der ersten Führungsleiste 27 etwas unterhalb der seitlichen Schneidkante 21. Bereits unmittelbar nach dem Eingriff der seitlichen Schneidkante 21 kommt also die erste Führungsleiste 27 mit der entstehenden Bohrungswandung in Eingriff und fängt die Reaktionskräfte ab.

Figur 1 ist zu entnehmen, daß der Vollbohrer 1 mit einer Kühlmittelzufuhr versehen sein kann, die beispielsweise einen zentral innerhalb einer Bohrung 29 verlaufenden Zufuhrkanal im Grundkörper 3 umfassen kann, in den ein Kühlmittelkanal 31 mündet, der sich in der Stirnseite 11 des Vollbohrers 1 öffnet.

Die die Messerplatte 7 aufnehmende Nut 9 weist eine erste Anlagefläche 33 auf, die links von der Drehachse 17 angeordnet ist. Auf dieser stützt sich die Messerplatte 7 vorzugsweise mit Bereichen, die der Schneidkante 13' unmittelbar benachbart sind. Im Bereich der in Figur 1 untenliegenden Schneidkante 15' liegt die Messerplatte 7 frei, das heißt, sie berührt den Grund der Nut 9 nicht. Dagegen liegt die rechte Seitenkante 34 der Messerplatte 7, die der seitlichen Schneidkante 21 gegenüberliegt, an einer zweiten Anlagefläche 35 an, die beispielsweise von der Rückseite der ersten Führungsleiste 27 gebildet werden kann.

Figur 1 zeigt, daß die linke seitliche Begrenzungskante der Messerplatte 7 ausgehend von der seitlichen Schneidkante 21 etwas in Richtung auf die Drehachse 17 zurückspringt, wobei die seitliche Schneidkante 21 den äußersten Bereich der Messerplatte 7 bildet und dieser gegenüberliegend, in Figur 1 unten, ein am weitesten zurückspringender Bereich 37 erkennbar ist. Die linke Seitenkante der Messerplatte 7 verläuft parallel zur rechten Seitenkante 34 der Messerplatte 7.

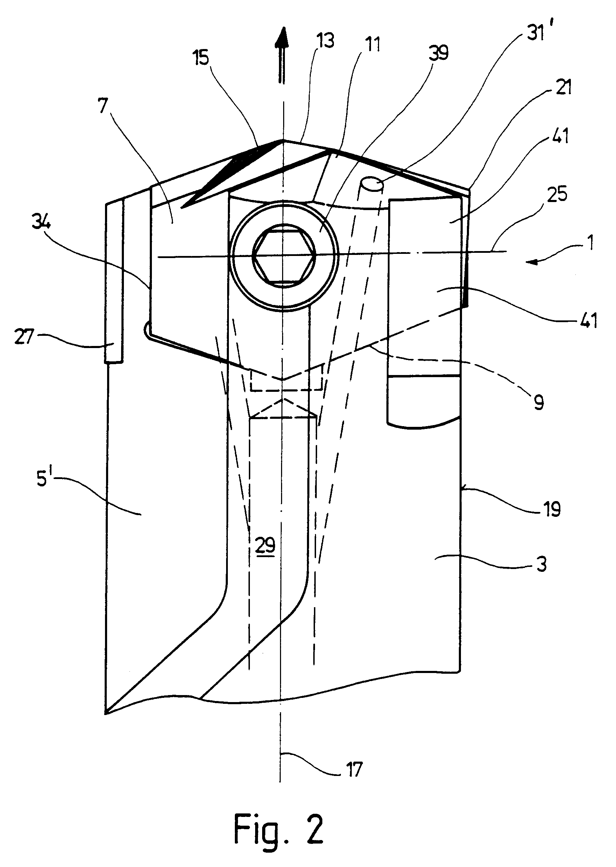

Entsprechend der zu Figur 1 gegebenen Definition zeigt Figur 2 eine Rückansicht der Vorderseite des Vollbohrers 1. Teile, die mit denen in Figur 1 übereinstimmen, sind mit gleichen Bezugsziffern versehen, so daß auf die Ausführungen oben verwiesen werden kann.

Figur 2 zeigt, wie in den Vollbohrer 1 eine Messerplatte 7 in eine stirnseitig in den Grundkörper 3 des Vollbohrers eingebrachte Nut 9 eingesetzt ist. Die Messerplatte wird von einer Spannschraube 39 so gehalten, daß zwei Schneidkanten 15 und 13 die Stirnseite 11 des Vollbohrers 1 überragen. Gleichzeitig überragt die seitliche Schneidkante 21 die Umfangsfläche 19 des Vollbohrers 1. Die sich an die seitliche Schneidkante 21 anschließende Seitenkante der Messerplatte 7 verläuft wiederum parallel zur entgegengesetzt angeordneten Seitenkante 34 der Messerplatte 7.

In den Grundkörper 3 des Vollbohrers 1 ist auch auf dieser Seite ein Freiraum eingearbeitet worden, um einen Spanabfuhrraum 5' auszubilden, durch den von der Schneidkante 15 abgetragene Späne abgeführt werden können.

Benachbart zur seitlichen Schneidkante 21 ist in die Umfangfläche 19 des Vollbohrers 1 eine zweite Führungsleiste 41 eingebracht. Entsprechend ist - gemäß Figur 1- benachbart zur ersten Führungsleiste 27 eine dritte Führungsleiste 43 in die Umfangfläche 19 des Vollbohrers 1 eingebracht.

Gestrichelt angedeutet ist, daß ausgehend von dem Zufuhrkanal 29 auch hier ein Kühlmittelkanal 31' vorgesehen ist, der sich in der Stirnseite 11 des Vollbohrers 1 öffnet. Hier austretendes Kühlmittel dient einerseits der Schmierung und Kühlung des Werkzeugs andererseits dem Abtransport der bei der Bearbeitung anfallenden Späne.

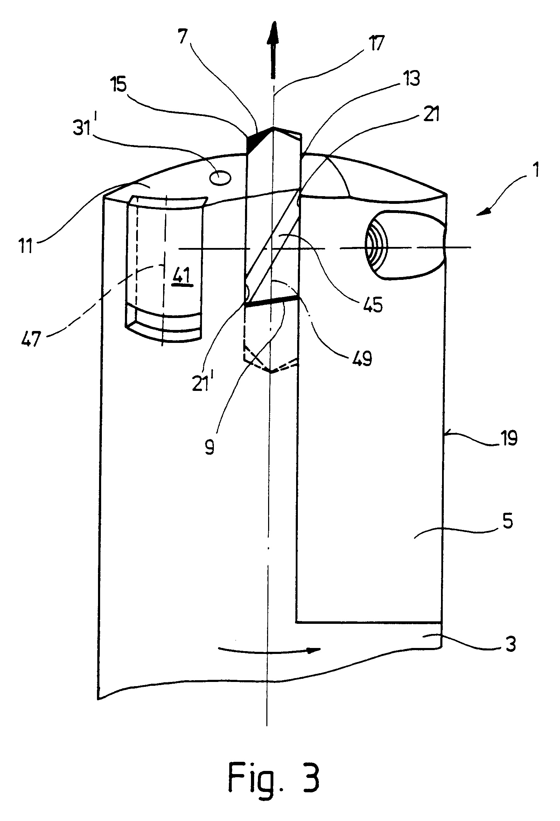

Aus Figur 2 wird noch einmal besonders deutlich, daß sich die erste Führungsleiste 27 über die in Richtung der Drehachse 17 gemessene Höhe der Messerplatte 7 erstreckt. Sie kann etwa so lang ausgebildet sein wie die zweite Führungsleiste 41 beziehungsweise die dritte Führungsleiste 43. Die zweite und dritte Führungsleiste können jedoch auch deutlich kürzer als die erste Führungsleiste sein, was sich beispielsweise aus der im folgenden erläuterten Figur 3 ergibt.

Figur 3 zeigt eine Seitenansicht der Vorderseite des Vollbohrers 1, und zwar eine Draufsicht auf die seitliche Schneidkante 21 der Messerplatte 7. Teile, die anhand der Figuren 1 und 2 erläutert wurden, tragen die gleichen Bezugsziffern, so daß auf deren Beschreibung hier verzichtet werden kann.

Aus der schematischen Darstellung gemäß Figur 3 ist ersichtlich, daß die Schneidkanten 13 und 15 der Messerplatte 7 die Stirnseite 11 des Vollbohrers 1 überragen und auf gegenüberliegenden Seiten der Messerplatte 7 liegen, wobei unterstellt wird, daß sich das Werkzeug bei einer Vorschubbewegung in Richtung des Doppelpfeils, also von unten nach oben, im Uhrzeigersinn dreht, so daß die seitliche Schneidkante 21 sich in Figur 3 von links nach rechts bewegt und dabei Späne von der Bohrungswandung abträgt. Entsprechend bewegt sich auch die Schneidkante 13 in Figur 3 von links nach rechts und die Schneidkante 15 entgegengesetzt von rechts nach links.

Von der Schneidkante 13 und der seitlichen Schneidkante 21 abgetragene Späne werden über den Spanraum 5 entfernt.

Die Draufsicht auf die Seitenfläche der Messerplatte 7 zeigt, daß hier Bereiche verschiedener Hohe vorgesehen sind. An die seitliche Schneidkante 21 schließt sich ein abfallender Bereich an, also ein Bereich, der in die Bildebene hinein abfällt und eine Verjüngung darstellt. Auf gleicher Höhe mit der seitlichen Schneidkante 21 liegt die diametral gegenüberliegende untere seitliche Schneidkante 21'. An diese schließt sich -in Figur 3 rechts- wiederum ein abfallender Bereich an, der sich in die Bildebene hinein absenkt und eine Verjüngung der Schneide darstellt. Diagonal auf der Seitenfläche der Messerplatte 7 verläuft also ein Bereich mit praktisch gleicher Höhe, der hier mit der Bezugsziffer 45 gekennzeichnet ist. Dieser Bereich verläuft im wesentlichen parallel zu der beim Einsatz des Vollbohrers 1 entstehenden Wandung der Bohrung.

Figur 3 zeigt, daß in Drehrichtung gesehen, die durch einen Pfeil in Figur 3 angedeutet ist, die zweite Führungsleiste 41 der Schneide 21 nacheilt. Die Mittelachse 47 der zweiten Führungsleiste 41 befindet sich daher in einem Abstand zur Mittelebene 49 der Messerplatte 7, die hier die Drehachse 17 schneidet.

Figur 3 läßt überdies erkennen, daß die Unterseite der Messerplatte 7 auf dem Grund der Nut 9 aufliegt, die hier die erste Anlagefläche 33 ausbildet, wie anhand von Figur 1 erläutert.

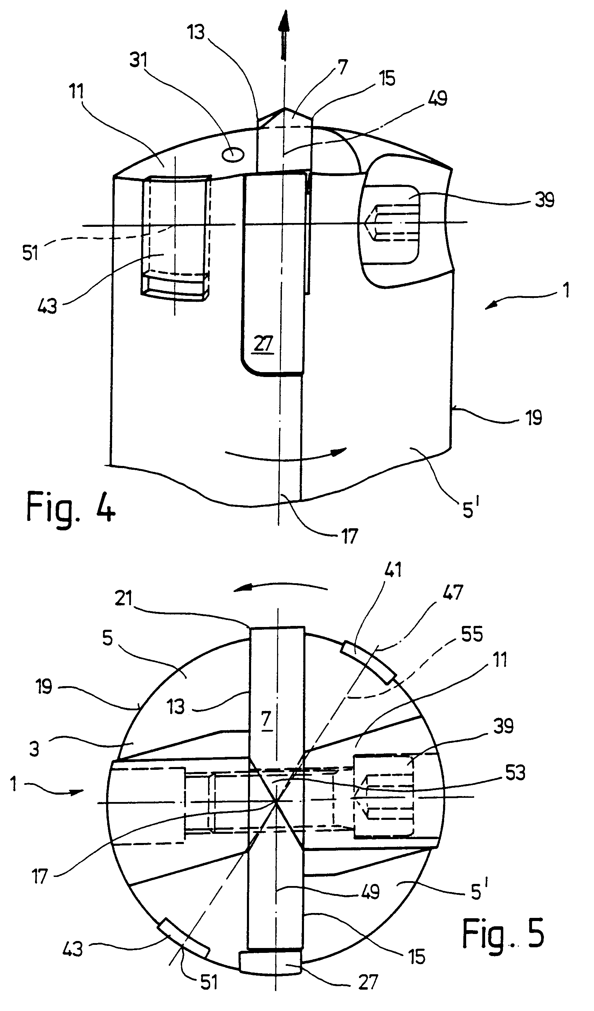

Figur 4 zeigt den Vollbohrer 1 aus einer gegenüber Figur 3 entgegengesetzten Ansicht. Gleiche Teile sind auch hier mit gleichen Bezugsziffern versehen, so daß auf die bereits erfolgte Beschreibung verwiesen werden kann.

Bei dieser in Figur 4 gewählten Ansicht ist die erste Führungsleiste 27 besonders deutlich erkennbar, die der in den übrigen Figuren gezeigten seitlichen Schneidkante 21 gegenüberliegend angeordnet ist und die bei der Bearbeitung einer Bohrung an der seitlichen Schneidkante entstehende Kräfte abfängt. Die Breite der Führungsleiste 27 ist hier etwas größer gewählt als die Dicke der Messerplatte 7. In einem Abstand zur ersten Führungsleiste 27 ist die dritte Führungsleiste 43 erkennbar, deren Mittelachse 51 einen Abstand zur Mittelebene 49 der Messerplatte 7 aufweist, die hier mit der Drehachse 17 des Vollbohrers 1 zusammenfällt. Bei einer Vorschubbewegung des Vollbohrers 1 in Richtung des Doppelpfeils findet wiederum eine Drehung des Werkzeugs im Uhrzeigersinn statt. Die Drehbewegung ist durch einen einfachen Pfeil in Figur 4 angedeutet. Dabei bewegt sich die Schneidkante 15 der Messerplatte 7 in Figur 4 von links nach rechts, entsprechend die Schneidkante 13 von rechts nach links.

Die von der stirnseitig angeordneten Schneidkante 15 abgetragenen Späne werden über den Spanraum 5' entfernt.

Figur 5 zeigt schließlich eine Draufsicht auf die Stirnfläche 11 des anhand der Figuren 1 bis 4 erläuterten Vollbohrers 1. Gleiche Teile sind mit gleichen Bezugsziffern versehen, so daß auf die Beschreibung oben verwiesen werden kann.

Der Darstellung ist zu entnehmen, daß die Messerplatte 7 einseitig die Umfangsfläche 19 des Grundkörpers 3 des Vollbohrers 1 überragt und eine seitliche Schneidkante 21 aufweist. In dem die Stirnfläche 11 des Vollbohrers 1 überragenden Bereich der Messerplatte 7 werden die Schneidkanten 13 und 15 ausgebildet, denen die Spanräume 5 und 5' zugeordnet sind. Bei der Bearbeitung eines Werkstücks anfallende Späne werden über die genannten Spanräume abgeführt. Dabei wird das Werkzeug in Rotation versetzt, bei der Ansicht gemäß Figur 5 drehen sich die seitliche Schneidkante 21 und die Schneidkanten 13 und 15 gegen den Uhrzeigersinn, was hier durch einen Pfeil angedeutet ist.

Da die Messerplatte 7 die Drehachse 17 des Vollbohrers 1 überragt, das heißt, sich von der seitlichen Schneidkante 21 vorzugsweise bis zur ersten Führungsleiste 27 erstreckt, um einen optimalen Kräfteausgleich zu gewährleisten, ist im Bereich der Drehachse 1 eine sogenannte Ausspitzung 53 vorgesehen, die für Schneiden üblich ist, sofern diese die Drehachse eines Werkzeugs übergreifen.

Aus der Draufsicht ist nochmal deutlich erkennbar, daß die erste Führungsleiste 27 der Seite der Messerplatte 7 gegenüberliegend angeordnet ist, auf der die seitliche Schneidkante 21 vorgesehen ist. In Drehrichtung gesehen nacheilend zur seitlichen Schneidkante 21 ist die zweite Führungsleiste 41 angeordnet, während die dritte Führungsleiste 43 der ersten Führungsleiste 27 -in Drehrichtung gesehen- nachlaufend angeordnet ist. Dicke und Breite der Führungsleisten können an die jeweiligen Gegebenheiten angepaßt werden. Die zweite Führungsleiste 41 ist gemäß Figur 5 der dritten Führungsleiste 43 gegenüberliegend angeordnet, wobei eine Verbindungslinie der Mittelachsen 47 der zweiten Führungsleiste 41 und 51 der dritten Führungsleiste 43 die Drehachse 17 schneidet. Die gedachte Verbindungslinie 55 schließt mit der die Drehachse 17 schneidenden Mittelebene 49 der Messerplatte 7 einen Winkel β von 20° bis 60°, vorzugsweise von 30° bis 40° und insbesondere von 45° ein.

Ein entsprechender Winkel ergibt sich daher auch für die der ersten Führungsleiste 27 nacheilende dritte Führungsleiste 43.

Insgesamt ergibt sich folgende Funktionsweise des Vollbohrers 1:

Der Vollbohrer wird in Rotation versetzt und mit einem stillstehenden Werkstück in Eingriff gebracht. Dabei ist es grundsätzlich auch möglich, den Bohrer feststehend anzuordnen, und gegenüber diesem das Werkstück rotieren zu lassen.

Mit den beiden die Stirnseite des Vollbohrers 1 überragenden Schneiden 13 und 15 der Messerplatte 7 wird ins Volle gearbeitet und eine Bohrung in das Werkstück eingebracht. Dabei wirkt der Vollbohrer als Zweischneider. Die seitliche Schneidkante 21 bearbeitet Bereiche der entstehenden Bohrung, die nahe der späteren Bohrungswandung liegen. Der Vollbohrer entspricht hier quasi einer Reibahle, die als Einschneider ausgebildet ist. Da die Schneidkanten 13 und 15 vorzugsweise ähnliche Längen aufweisen, zentriert sich der Vollbohrer im Werkstück selbst. Die durch die seitliche Schneidkante 21 entstehenden Kräfte werden durch die erste Führungsleiste 27 abgefangen. Vorzugsweise sind zwei zusätzliche Führungsleisten, die zweite Führungsleiste 41 und die dritte Führungsleiste 43 vorgesehen, die den Vollbohrer 1 in der entstehenden Bohrung besonders gut führen, so daß einerseits eine sehr gute Maßhaltigkeit und andererseits eine optimale Oberflächenqualität der Bohrung erzielt wird.

Bei geringeren Bearbeitungsanforderungen kann auf die dritte Führungsleiste 43 gegebenenfalls verzichtet werden.

Sofern die stirnseitig vorgesehenen Schneidkanten 13 und 15 beziehungsweise die seitliche Schneidkante 21 abgenutzt sind, kann die Messerplatte 7 umgeklappt werden. Das heißt, die zunächst untenliegenden Schneidkanten 13', 15' und 21' werden durch die um die Querachse 25 vollzogene Drehbewegung um 180° nach oben verlagert und kommen danach in Eingriff mit dem zu bearbeitenden Werkstück. Die Messerplatte kann also als Wendeplatte ausgenutzt werden. Sie ist dazu zur Querachse 25 symmetrisch ausgebildet, was aus den Figuren 1, 2 und 3 ersichtlich ist.

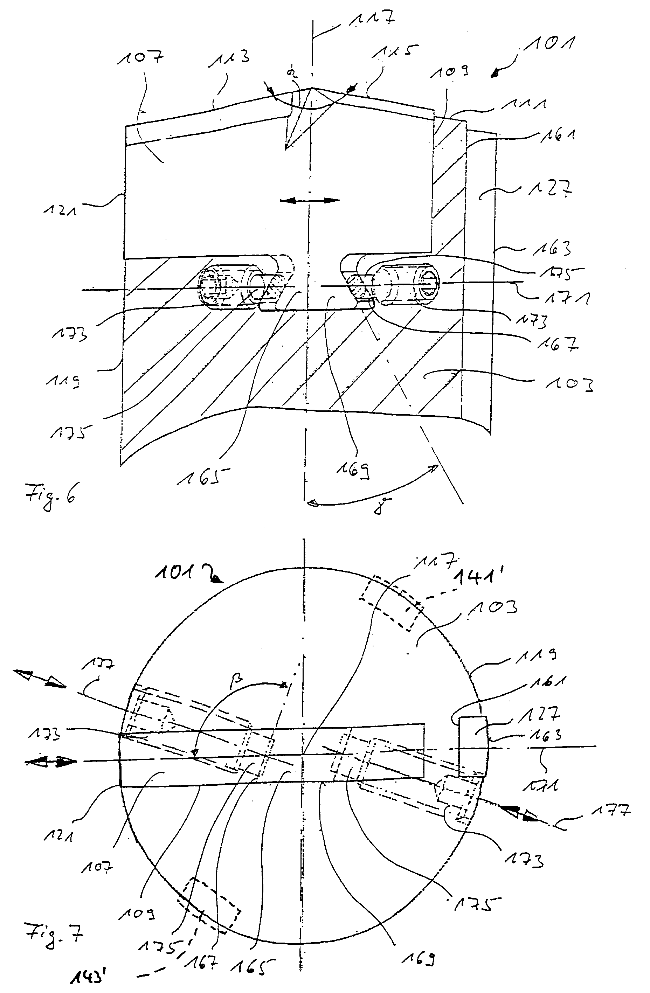

Die Figur 6 zeigt die Seitenansicht eines erfindungsgemäßen Vollbohrers 101 bei der zur besseren Verdeutlichung Teilbereiche perspektivisch dargestellt sind. Der Vollbohrer 101 besitzt einen im wesentlichen kreiszylindrisch ausgebildeten Grundkörper 103. In dem Grundkörper 103 ist eine hier nur angedeutete Nut 109 eingebracht, in der eine Messerplatte 107 angeordnet ist. Die Nut 109 ist stirnseitig in den Grundkörper 103 eingebracht, so daß die Messerplatte 107 eine Stirnseite 111 überragen kann. Die Messerplatte 107 weist stirnseitig zwei Schneidkanten 113 und 115 auf. Die Schneidkanten 113 und 115 schneiden sich in der mit der Mittelachse des Vollbohrers 101 zusammenfallenden Drehachse 117 des Werkzeugs. Die Schneidkante 113 und 115 schließen dabei einen stumpfen Winkel α ein.

Die Schneidkante 113 der Messerplatte 107 überragt eine Umfangsfläche 119 des Grundkörpers 103 und bildet somit eine seitliche Schneidkante 121. Gegenüberliegend der Schneidkante 121 ist eine Führungsleiste 127 angeordnet. Die Führungsleiste 127 greift dabei in eine Längsnut 161 ein und überragt mit ihrem äußeren Abschluß 163 die Umfangsfläche 119 des Grundkörpers 103.

In der Figur 6 ist die Schnittfläche des Grundkörpers 103 hinter die Messerplatte 107 und die Führungsleiste 127 gelegt, so daß die hier ersichtlichen Überstände der Schneidkante 121 beziehungsweise des Abschlusses 163 über die Umfangsfläche 119 nicht maßstäblich sind.

Hinsichtlich der Funktion der bis hierher erläuterten Bestandteile des Vollbohrers 101 wird auf die zu den Figuren 1 bis 5 gemachten Erläuterungen verwiesen, so daß hier Wiederholungen vermieden werden.

Die Messerplatte 107 besitzt eine axiale Verlängerung 165. Die Verlängerung 165 ist im Bereich der Drehachse 117 angeordnet. Die Verlängerung 165 besitzt eine schwalbenschwanzförmige Gestalt, so daß sich einerseits Wirkflächen 167 und Führungsflächen 169 ergeben. Die Führungsflächen 169 laufen parallel zur der Nut 109, so daß die Messerplatte 107 gemeinsam mit der Verlängerung 165 in der Nut 109 beweglich ist.

Die Wirkflächen 167 verlaufen in einem Winkel β zu einer durch die Nut 109 verlaufenden Radialen 171. Gleichzeitig verlaufen die Wirkflächen 167 in einem Winkel γ zu der Drehachse 117. Durch diese Anordnung der Wirkflächen sind diese, wie durch die perspektivische Ansicht der Verlängerung 165 verdeutlicht werden soll, in Bezug auf die Messerplatte 107 verdreht. Gemäß einem anderen Ausführungsbeispiel können die Winkel β und γ selbstverständlich 90° beziehungsweise 0° betragen, so daß die Verlängerung 65 in diesem Fall als einfacher Zapfen ausgebildet ist.

Zur Aufnahme der axialen Verlängerung 65 kann die Nut 109 eine in der Figur 6 nicht dargstellte Ausnehmung an ihrem Grund aufweisen. Die Ausnehmung ist dabei in Längsrichtung der Nut 109 größer ausgebildet als die Verlängerung 65, so daß sich die mit dem Doppelpfeil in der Figur 6 angedeutete radiale Beweglichkeit der Messerplatte 107 ergibt.

Innerhalb des Grundkörpers 103 sind Spannschrauben 173 angeordnet, die im hier gezeigten Beispiel über einen Innensechskant betätigbar sind. Selbstverständlich ist jede andere Ausführungsform der Spannschrauben 173 möglich. Die Spannschrauben 173 besitzen in ihrer Axialen jeweils einen Spannkörper 175 die gegen die Wirkflächen 167 der Verlängerung 165 führbar sind. Die den Wirkflächen 167 gegenüberliegenden Abschlüsse der Spannkörper 175 sind der Kontur der Wirkflächen 167 entsprechend angepaßt, so daß sich eine möglichst große Auflagefläche zwischen den Spannkörpern 175 und der Wirkfläche 167 ergibt. Nach einem nicht gezeigten Ausführungsbeispiel könnnen die Spannkörper 175 auch ein Außengewinde aufweisen, das in entsprechendes Innengewinde der Verlängerung 165 eingreift.

In der in Figur 7 gezeigten Frontansicht des erfindungsgemäßen Vollbohrers 101 sind gleiche Teile wie in Figur 6 mit gleichen Bezugszeichen versehen und nicht nochmals erläutert.

Es wird deutlich, daß die Messerplatte 107 in der stirnseitig angeordneten Nut 109 des Grundkörpers 103 angeordnet ist. Die Spannschrauben 173 sind so angeordnet, daß sich eine durch sie erstreckende Axiale 177 parallel zu einer durch die Drehachse 117 gedachten verlaufenden Radialen liegt.

Die in den Figuren 6 und 7 gezeigte Anordnung übt folgende Funktion aus: Bei einer Drehbewegung des Werkzeugs und damit des Grundkörpers 103 arbeiten die stirnseitigen Schneidkanten 113 und 115 ins Volle eines Werkstücks, während die Schneidkante 121 eine Seitenbearbeitung des durch die Schneidkanten 113 und 115 entstandenen Bohrloches übernimmt. Die der Schneidkante 121 gegenüberliegende Führungsleiste 127 fängt die durch die Schneidkante 121 entstehenden Reaktionskräfte ab und leitet diese in die Wandung der entstehenden Bohrung ab.

Für eine Zentrierung des Vollbohrers 101 und eine optimale Ableitung der Reaktionskräfte ist es besonders günstig, daß die Messerplatte einstellbar ist. Nur so ist eine genaue Maßhaltigkeit des Vollbohrers 101 möglich. Hierzu kann nun die Messerplatte 107 mit Hilfe der Spannschrauben 173 genau justiert werden. Je nachdem in welche Richtung die Messerplatte 107, wie durch den der Messerplatte 107 zugeordneten Doppelpfeil in der Figur 7 angedeutet, verschoben werden soll, werden die Spannschrauben 173 betätigt. In dem beispielsweise die in der Figur 7 links angeordnete Spannschraube 173 gelöst, das heißt, teilweise herausgeschraubt wird, wird der Spannkörper 175 druckentlastet. Bei einer Ausführung, bei der der Spannkörper 175 eine Verlängerung der Spannschraube 173 darstellt, würde dieser entsprechend zurückbewegt werden. Durch ein nachfolgendes Betätigen, das heißt, Einschrauben der Spannschraube 173 wird über den Spannkörper 175 eine Kraft auf die Wirkfläche 167 der Verlängerung 165 ausgeübt. Infolge dieser Spannkraft wird die Messerplatte 107 innerhalb der Nut 109 entlang der Führungsflächen 169 verschoben. Diese Verschiebung findet soweit statt, bis die in Figur 7 links dargestellte Wirkfläche 167 wieder an den ihr zugeordneten Spannkörper 175 anliegt. Durch Festziehen beider Spannschrauben 173 wird die Messerplatte 107 dann arretiert, das heißt, festgeklemmt.

Durch dieses radiale Verschieben der Messerplatte 107 kann der Abstand der aktiven Schneidkante 121 zur äußeren Oberfläche der gegenüberliegenden Führungsleiste 127 genau justiert werden. Die Justierung erfolgt solange, bis der gewünschte Durchmesser des Bohrers und damit der Bohrung erreicht ist, der sich dadurch ergibt, daß der gewünschte Abstand zwischen aktiver Schneide und Außenfläche der gegenüberliegenden Führungsleiste eingestellt wird. Durch die zwei vorgesehenen Spannschrauben 173 ist eine radiale Beweglichkeit der Messerplatte 107 in beide Richtungen möglich.

Während des Arbeitens des Vollbohrers 107 tritt an der Schneidkante 121 ein Verschleiß auf. Dieser kann durch eine radiale Verschiebung der Messerplatte 107 ausgeglichen werden, so daß jederzeit wieder der gewünschte Durchmesser eingestellt werden kann. Damit ist der Vollbohrer 121 in der Lage, auch bei sehr großen Standzeiten exakt justierte Bohrungen ins Volle herzustellen. Auch kann gegebenenfalls der Austausch einer Führungsleiste 127 und der damit sich neu ergebende Überstand des Abschlusses 163 über die Umfangsfläche 119 ausgeglichen werden. Darüber hinaus ist es letzlich möglich, eventuelle Fertigungstoleranzen bei der Herstellung der Messerplatten 107 und/oder der Führungsleiste 127 und/oder der Nuten 109 und 161 durch die radiale Verschiebung der Messerplatte 107 auszugleichen.

In Figur 7 ist angedeutet, daß der Vollbohrer auch mehrere Führungsleisten aufweisen kann. Zusätzlich zur Führungsleiste 127 kann eine erste weitere Führungsplatte 141' und eine zweite weitere Führungsplatte 143' vorgesehen sein. Beide sind in Figur 7 gestrichelt angedeutet. Bezüglich der Anordnung dieser Führungsleisten 141' und 143' wird auf die Beschreibung zu Figur 5 und den dort erläuterten Führungsleisten 41 und 43 verwiesen.

## Patentansprüche

1. Vollbohrer mit einem Grundkörper (103), einer stirnseitig offenen, eine Messerplatte (107) radial verschieblich aufnehmenden Nut (109), mit einer die Messerplatte (107) fixierenden Spanneinrichtung, und mit wenigstens einer in die Umfangsfläche des Grundkörpers eingesetzten Führungsleiste, wobei die Messerplatte (107) mit einer seitlichen Schneidkante (121) die Umfangsfläche (119) des Grundkörpers (103) überragt und die Breite der Messerplatte (107) so gewählt ist, daß sie sich unter Ausbildung zweier stirnseitig wirkender Schneiden (113, 115) über die mit der Mittelachse zusammenfallende Drehachse (117) des Vollbohrers (101) hinwegerstreckt, **dadurch gekennzeichnet**, daß die Messerplatte (107) eine sich axial in den Grundkörper (103) erstreckende Verlängerung (165) aufweist, und daß die Spanneinrichtung an der axialen Verlängerung (165) angreift und so ausgebildet ist, daß sie als der radialen Justierung der Messerplatte (107) dienende Verstelleinrichtung (173, 175) wirkt.

2. Vollbohrer nach Anspruch 1, **dadurch gekennzeichnet**, daß die Verlängerung (165) im Bereich der Drehachse (117) angeordnet ist.

3. Vollbohrer nach einem der vorhergehenden Ansprüche, **dadurch gekennzeichnet**, daß die Verlängerung (165) Wirkflächen (167) aufweist, an die die Verstelleinrichtung angreift.

4. Vollbohrer nach einem der vorhergehende Ansprüche, **dadurch gekennzeichnet**, daß den Wirkflächen (167) Spannkörper (175) zugeordnet sind, die mittels der Verstelleinrichtung gegen die Verlängerung (165) führbar sind.

5. Vollbohrer nach einem der vorhergehende Ansprüche, **dadurch gekennzeichnet**, daß die Spannkörper (175) mittels in den Grundkörper (103) angeordneter Spannschrauben (173) gegen die Verlängerung (165) führbar sind.

6. Vollbohrer nach einem der vorhergehende Ansprüche, **dadurch gekennzeichnet**, daß die Verlängerung (165) gegenüberliegend zwei Wirkflächen (167) aufweist die jeweils mit einer Verstelleinrichtung zusammenwirkt.

7. Vollbohrer nach einem der vorhergehende Ansprüche, **dadurch gekennzeichnet**, daß die Wirkflächen (167) in einem von einem rechten Winkel abweichenden Winkel β zu einer durch die Nut (109) verlaufenden Radialen (171) verlaufen.

8. Vollbohrer nach einem der vorhergehende Ansprüche, **dadurch gekennzeichnet**, daß die Wirkflächen (167) in einem Winkel (γ) zur Drehachse (117) verlaufen.

9. Vollbohrer nach einem der vorhergehende Ansprüche, **dadurch gekennzeichnet**, daß die parallel zur Nut (109) verlaufenden Seiten der Verlängerung (165) als Führungsflächen (169) ausgebildet sind.

10. Vollbohrer nach einem der vorhergehende Ansprüche, **dadurch gekennzeichnet**, daß die Nut (109) an ihrem Grund eine Ausnehmung aufweist, innerhalb der die Verlängerung (165) in Längsrichtung der Nut (109) verschiebbar ist.

11. Vollbohrer nach einem der vorhergehende Ansprüche, **dadurch gekennzeichnet**, daß eine Führungsleiste (127) so angeordnet ist, daß sie sich praktisch über die ganze -in Richtung der Drehachse (117) des Vollbohrers (101) gemessene- Höhe der Messerplatte (107) erstreckt.

12. Vollbohrer nach einem der vorhergehende Ansprüche, **dadurch gekennzeichnet**, daß der die Umfangsfläche (119) des Grundkörpers (103) des Vollbohrers (101) überragenden seitlichen Schneidkante (121) der Messerplatte (107) und/oder der ersten Führungsleiste (127) eine weitere Führungsleiste (141', 143') zugeordnet ist, die der seitlichen Schneidkante (121) beziehungsweise der ersten Führungsleiste (127) -in Drehrichtung gesehen- nacheilt.

13. Vollbohrer nach einem der vorhergehende Ansprüche, **dadurch gekennzeichnet**, daß der seitlichen Schneidkante (121) eine zweite Führungsleiste (141') zugeordnet ist, wobei diese und eine der ersten Führungsleiste (127) zugeordnete dritte Führungsleiste (143') einander gegenüberliegend angeordnet sind.

14. Vollbohrer nach einem der vorhergehende Ansprüche, **dadurch gekennzeichnet**, daß die Mittelachsen der zweiten und dritten Führungsleiste (141', 143') und die entlang einer gedachten Druchmesserlinie durch die Drehachse (117) des Vollbohrers (101) verlaufende Mittelebene der Messerplatte (107) einen Winkel β von 20° bis 60° vorzugsweise von 30° bis 40°, insbesondere von ca. 35° einschließen.

15. Vollbohrer nach einem der vorhergehende Ansprüche, **dadurch gekennzeichnet**, daß die Breite der ersten Führungsleiste (127) gleich oder größer ist als die Dicke der Messerplatte (107).

16. Vollbohrer nach einem der vorhergehenden Ansprüche, **dadurch gekennzeichnet**, daß die Breite der zweiten und/oder dritten Führungsleiste (141', 143') gleich oder kleiner ist als die Breite der ersten Führungsleiste (127).

17. Vollbohrer nach einem der vorhergehenden Anprüche **dadurch gekennzeichnet**, daß die die Umfangsfläche (119) des Vollbohrers (101) überragende, von der seitlichen Schneidkante (121) ausgehende Seitenkante der Messerplatte (107) von der Schneidkante (121) aus gesehen zurückspringt.

18. Vollbohrer nach einem der vorhergehenden Ansprüche **dadurch gekennzeichnet**, daß die die Umfangsfläche (119) des Vollbohrers (101) überragende Seitenkante und die dieser gegenüberliegende Seitenkante der Messerplatte (107) parallel zueinander angeordnet sind.

19. Vollbohrer nach einem der vorhergehenden Ansprüche, **dadurch gekennzeichnet**, daß die die Stirnfläche (111) überragenden Seitenkanten (113, 115) der Messerplatte (107) einen stumpfen Winkel (α) einschließen.

20. Vollbohrer nach einem der vorhergehenden Ansprüche, **dadurch gekennzeichnet**, daß sich die die Stirnseite (111) überragende Schneidkante (115) der Messerplatte (107) im wesentlichen bis zur ersten Führungsleiste (127) erstreckt.

## Claims

1. A solid drill bit comprising a main body (103), a groove (109) open at the front end and holding a radially displaceable cutter plate (107), a clamping device fixing the cutter plate (107), and at least one guide strip inserted into the circumferential surface of the main body, wherein the cutter plate (107) has a lateral cutting edge (121) projecting beyond the circumferential surface (119) of the main body (103), and the width of the cutter plate (107) is selected so that the latter extends beyond the rotation axis (117) of the solid drill bit (101), coinciding with the central axis, to form two cutting edges (113, 115) acting at the front end, characterised in that the cutter plate (107) has an extension (165) extending axially into the main body (103), and in that the clamping device engages the axial extension (165) and is so formed that it acts as an adjusting device (173, 175) allowing radial adjustment of the cutter plate (107).

2. A solid drill bit according to claim 1, characterised in that the extension (165) is arranged in the region of the rotation axis (117).

3. A solid drill bit according to any one of the preceding claims, characterised in that the extension (165) has working surfaces (167) engaged by the adjusting device.

4. A solid drill bit according to any one of the preceding claims, characterised in that clamping members (175) are associated with the working surfaces (167) and are movable towards the extension (165) by means of the adjusting device.

5. A solid drill bit according to any one of the preceding claims, characterised in that the clamping members (175) are movable towards the extension (165) by means of clamping screws (173) arranged in the main body (103).

6. A solid drill bit according to any one of the preceding claims, characterised in that the extension (165) has two opposing working surfaces (167) each co-operating with an adjusting device.

7. A solid drill bit according to any one of the preceding claims, characterised in that the working surfaces (167) extend at an angle β - deviating from a right angle - to a radial line (171) extending through the groove (109).

8. A solid drill bit according to any one of the preceding claims, characterised in that the working surfaces (167) extend at an angle (γ) to the rotation axis (117).

9. A solid drill bit according to any one of the preceding claims, characterised in that the sides of the extension (165) extending parallel to the groove (109) are formed as guide surfaces (169).

10. A solid drill bit according to any one of the preceding claims, characterised in that the base of the groove (109) has a recess, in which the extension (165) is displaceable in the longitudinal direction of the groove (109).

11. A solid drill bit according to any one of the preceding claims, characterised in that a guide strip (127) is arranged so as to extend substantially over the entire height of the cutter plate (107) measured along the rotation axis (117) of the solid drill bit (101).

12. A solid drill bit according to any one of the preceding claims, characterised in that a further guide strip (141', 143') is associated with the lateral cutting edge (121) of the cutter plate (107) and/or the first guide strip (127), the lateral cutting edge (121) projecting beyond the circumferential surface (119) of the main body (103) of the solid drill bit (101), and, viewed in the direction of rotation, lags behind the lateral cutting edge (121) or the first guide strip (127).

13. A solid drill bit according to any one of the preceding claims, characterised in that a second guide strip (141') is associated with the lateral cutting edge (121), the second guide strip and a third guide strip (143') associated with the first guide strip (127) being arranged opposite one another.

14. A solid drill bit according to any one of the preceding claims, characterised in that the central axes of the second and third guide strips (141', 143'), and the central plane of the cutter plate (107), extending along an imaginary diametral line through the rotation axis (117) of the solid drill bit (101), form an angle β of 20° to 60°, preferably 30° to 40°, in particular approximately 35°.

15. A solid drill bit according to any one of the preceding claims, characterised in that the width of the first guide strip (127) is equal to or greater than the thickness of the cutter plate (107).

16. A solid drill bit according to any one of the preceding claims, characterised in that the width of the second and/or third guide strip (141', 143') is equal to or smaller than the width of the first guide strip (127).

17. A solid drill bit according to any one of the preceding claims, characterised in that the lateral edge of the cutter plate (107), projecting beyond the circumferential surface (119) of the solid drill bit (101) and starting from the lateral cutting edge (121), is set back when viewed from the cutting edge (121).

18. A solid drill bit according to any one of the preceding claims, characterised in that the lateral edge projecting beyond the circumferential surface (119) of the solid drill bit (101), and the opposing lateral edge of the cutter plate (107) are arranged parallel to one another.

19. A solid drill bit according to any one of the preceding claims, characterised in that the lateral edges (113, 115) of the cutter plate (107), projecting beyond the end surface (111), form an obtuse angle (α).

20. A solid drill bit according to any one of the preceding claims, characterised in that the cutting edge (115) of the cutter plate (107), projecting beyond the end surface (111), extends substantially as far as the first guide strip (127).

## Revendications

1. Foret plein comprenant un corps de base (103), une rainure (109) ouverte du côté frontal et recevant une lame (107) mobile radialement, un dispositif de fixation pour immobiliser la lame (107), et au moins une baguette de guidage incorporée dans la surface circonférentielle du corps de base, sachant que la lame (107) fait saillie de la surface circonférentielle (119) du corps de base (103) avec une arête de coupe latérale (121) et que la largeur de la lame (107) est telle qu'elle s'étend par-dessus l'axe de rotation (117) du foret plein (110) qui coïncide avec l'axe médian en formant deux tranchants frontaux (113, 115), caractérisé en ce que la lame (107) présente un prolongement (165) s'étendant axialement dans le corps de base (103), et en ce que le dispositif de fixation agit sur le prolongement axial (165) et est réalisé de telle manière qu'il fait office de dispositif de réglage (173, 175) servant à l'ajustement radial de la lame (107).

2. Foret plein selon la revendication 1, caractérisé en ce que le prolongement (165) est placé au voisinage de l'axe de rotation (117).

3. Foret plein selon l'une des revendications précédentes, caractérisé en ce que le prolongement (165) présente des surfaces actives (167) sur lesquelles agit le dispositif de réglage.

4. Foret plein selon l'une des revendications précédentes, caractérisé en ce que des éléments de serrage (175) sont associés aux surfaces actives (167), qui peuvent être approchés du prolongement (165) au moyen du dispositif de réglage.

5. Foret plein selon l'une des revendications précédentes, caractérisé en ce que les éléments de serrage (175) peuvent être approchés du prolongement (165) au moyen de vis de serrage (173) placées dans le corps de base (103).

6. Foret plein selon l'une des revendications précédentes, caractérisé en ce que le prolongement (165) présente deux surfaces actives (167) opposées coopérant chacune avec un dispositif de réglage.

7. Foret plein selon l'une des revendications précédentes, caractérisé en ce que les surfaces actives (167) s'étendent avec un angle β différent de l'angle droit par rapport à une ligne radiale (171) traversant la rainure (109).

8. Foret plein selon l'une des revendications précédentes, caractérisé en ce que les surfaces actives (167) s'étendent avec un angle y par rapport à l'axe de rotation (117).

9. Foret plein selon l'une des revendications précédentes, caractérisé en ce que les côtés du prolongement (165) qui s'étendent parallèlement à la rainure (109) sont réalisés en tant que surfaces de guidage (169).

10. Foret plein selon l'une des revendications précédentes, caractérisé en ce que la rainure (109) présente dans son fond un évidement dans lequel le prolongement (165) peut coulisser longitudinalement par rapport à la rainure (109).

11. Foret plein selon l'une des revendications précédentes, caractérisé en ce qu'une baguette de guidage (127) est disposée de telle manière qu'elle s'étend pratiquement sur toute la hauteur de la lame (107) mesurée dans la direction de l'axe de rotation (117) du foret plein (101).

12. Foret plein selon l'une des revendications précédentes, caractérisé en ce qu'une baguette de guidage supplémentaire (141', 143') est associée à l'arête de coupe latérale (121) de la lame (107) qui fait saillie de la surface circonférentielle (119) du corps de base (103) du foret plein (101) et/ou à la première baguette de guidage (127), laquelle fait suite à l'arête de coupe latérale (121) ou à la première baguette de guidage (127), vue dans le sens de rotation.

13. Foret plein selon l'une des revendications précédentes, caractérisé en ce qu'une deuxième baguette de guidage (141') est associée à l'arête de coupe latérale (121), celle-ci et une troisième baguette de guidage (143') associée à la première baguette de guidage (127) étant disposées à l'opposé l'une de l'autre.

14. Foret plein selon l'une des revendications précédentes, caractérisé en ce que les axes médians des deuxième et troisième baguettes de guidage (141', 143') et le plan médian de la lame (107) qui longe un diamètre imaginaire coupant l'axe de rotation (117) forment un angle β compris entre 20° et 60°, de préférence entre 30° et 40°, notamment d'environ 35°.

15. Foret plein selon l'une des revendications précédentes, caractérisé en ce que la largeur de la première baguette de guidage (127) est égale ou supérieure à l'épaisseur de la lame (107).

16. Foret plein selon l'une des revendications précédentes, caractérisé en ce que la largeur de la deuxième et/ou de la troisième baguette de guidage (141', 143') est égale ou inférieure à la largeur de la première baguette de guidage (127).

17. Foret plein selon l'une des revendications précédentes, caractérisé en ce que, vue depuis l'arête de coupe (121), l'arête latérale de la lame (107) faisant saillie de la surface circonférentielle (119) du foret plein (101) et partant de l'arête de coupe latérale (121) est en retrait.

18. Foret plein selon l'une des revendications précédentes, caractérisé en ce que l'arête latérale faisant saillie de la surface circonférentielle (119) du foret plein (101) et l'arête latérale de la lame (107) opposée à la précédente sont parallèles entre elles.

19. Foret plein selon l'une des revendications précédentes, caractérisé en ce que les arêtes latérales (113, 115) de la lame (107) qui font saillie de la surface frontale (111) forment un angle obtus (α).

20. Foret plein selon l'une des revendications précédentes, caractérisé en ce que l'arête de coupe (115) de la lame (107) qui fait saillie de la face frontale (111) s'étend essentiellement jusqu'à la première baguette de guidage (127).
